(19) Europäisches Patentamt
European Patent Office
Office européen des brevets

(11) Numéro de publication : **0 443 916 A1**

# (12) DEMANDE DE BREVET EUROPEEN

(21) Numéro de dépôt : **91400370.2**

(51) Int. Cl.[5] : **C09J 133/00**

(22) Date de dépôt : **14.02.91**

(30) Priorité : **23.02.90 FR 9002239**

(43) Date de publication de la demande :
**28.08.91 Bulletin 91/35**

(84) Etats contractants désignés :
**BE DE ES FR GB IT NL**

(71) Demandeur : **CECA S.A.**
**22, Place des Vosges**
**F-92400 Courbevoie (FR)**

(72) Inventeur : **Charriere, Bruno**
**1, rue Paul-Jean Toulet**
**F-64110 Jurancon (FR)**

(74) Mandataire : **Haicour, Philippe et al**
**CECA S.A., DRDI, 95, Rue Danton**
**F-92303 Levallois-Perret (FR)**

## (54) Compositions adhésives anaérobies perfectionnées.

(57) On décrit des compositions adhésives anaérobies perfectionnées dont l'accélérateur est une alkylsulfonylphénylhydrazine. Ces compositions sont remarquablement stables au stockage et néanmoins à prise rapide au contact anaérobie de matériaux les plus divers. Elles sont particulièrement avantageuses pour le freinage et l'étanchéité des filetages et des emmanchements lisses en acier traité, par exemple acier zingué ou bichromaté.

EP 0 443 916 A1

Jouve, 18, rue Saint-Denis, 75001 PARIS

## COMPOSITIONS ADHESIVES ANAEROBIES PERFECTIONNEES

La présente invention se rapporte à un perfectionnement dans les formules de colles et adhésifs anaérobies.

Il est connu que l'on peut opérer l'assemblage de divers matériaux, essentiellement d'ailleurs des matériaux métalliques, à l'aide d'adhésifs basés sur des diméthacrylates formulés de telle manière que le durcissement de ces adhésifs se produise dès qu'ils sont soustraits au contact de l'air. Il suffit dès lors de revêtir les surfaces à assembler d'un tel adhésif et de les rapprocher étroitement, ce qui provoque la polymérisation de l'adhésif et la formation d'une liaison définitive.

Ces adhésifs, souvent dénommés Résines Anaérobies, sont très employés en mécanique pour réaliser le freinage et l'étanchéité de pièces filetées telles que vis, écrous, boulons, goujons, etc... Ils jouent également un rôle important pour l'assemblage par emmanchement de pièces lisses (par exemple pour la fixation de roues, poulies, ou roulements à billes sur leurs axes) où ils remplacent avantageusement les techniques traditionnelles telles que le montage à la presse, le frettage, la brasure, et éliminent les besoins de pièces d'assemblages supplémentaires (clavettes, goupilles, rondelles, vis de blocage, etc..).

Ces compositions adhésives, dites anaérobies sont basées, de façon très classique, sur un ester ou un mélange d'esters pluriacryliques susceptibles de polymérisation radicalaire à température ambiante, comme le diméthacrylate de tetraéthylène glycol, associés à des substances aptes à démarrer la polymérisation radicalaire desdits esters pluriacryliques par génération de radicaux libres dès que le mélange est soustrait à l'action de l'oxygène, et à entretenir ou accélérer cette polymérisation, traditionnellement un peroxyde ou hydroperoxyde organique comme l'hydroperoxyde de cumyle associé à la diméthylparatoluidine. De telles formules de base sont décrites dans le brevet US 3 218 305. Elles ont été améliorées par la suite par addition d'inhibiteurs d'oxydation, de complexants métalliques, d'additifs de viscosité, etc...

Les formules de base restent à prise relativement lente, et l'on a tenté de remédier à cet inconvénient par un choix approprié de l'accélérateur. Pour cela, on a fait appel à des composés azotés fort divers, notamment des dérivés d'hydrazine, comme par exemple le carbazate d'éthyle ou la N-aminorhodanine (FR 1 580 572), l'acétylphénylhydrazine (FR 2 311 832), la p.nitrophénylhydrazine (FR 2 283 191) ou encore le p.tolylsulfonylhydrazide (FR 2 283 190). Les résultats les plus communément obtenus sont une augmentation appréciable de la vitesse de prise sur les matériaux ferreux, mais au prix d'une perte souvent importante de la stabilité du produit au stockage et d'une difficulté réelle à obtenir la polymérisation de l'adhésif sur des surfaces non ferreuses ou traitées comme l'acier galvanisé ou bichromaté.

La présente invention remédie à ces inconvénients. Il a été trouvé maintenant que des accélérateurs basés sur des alkylsulfonylphénylhydrazines permettaient la réalisation de formules d'adhésifs anaérobies étonnamment réactives sur l'acier, mais aussi sur d'autres surfaces métalliques et même sur le verre, tout en conservant une très grande stabilité au stockage, et en développant des forces de liaisons très comparables et même supérieures à celles des formules connues de l'art antérieur. L'invention est ainsi constituée par des compositions adhésives anaérobies comportant un ester et/ou un mélange d'esters pluriacryliques susceptibles de polymérisation radicalaire à température ambiante, associés à des substances aptes à démarrer la polymérisation radicalaire desdits esters pluriacryliques par génération de radicaux libres dès que le mélange est soustrait à l'action de l'oxygène, et à entretenir ou accélérer cette polymérisation, composition dont la caractéristique est de contenir des alkylsulfonylphénylhydrazines.

Les esters pluriacryliques qui entrent dans la formulation des compositions anaérobies selon l'invention sont des molécules de formule générale

$$\left[ \begin{array}{l} CH_2 = C - C = O \\ \quad\;\; / \quad\quad \backslash \\ \;\;\; R \quad\quad\;\; O - \end{array} \right]_n - \left[ A_n \right]$$

qui comportent au moins deux groupements esters acryliques (n au moins égal à 2), et dans lesquels R représente l'hydrogène ou un radical alcoyle en $C_1$à $C_3$, notamment le méthyle, où $A_n$ est un reste organique n-valent (au moins divalent) comportant au moins deux atomes de carbone.

Des esters pluriacryliques qui conviennent particulièrement à la réalisation de l'invention, sont les diacrylates et diméthacrylates de tétraméthylène- ou d'hexaméthylèneglycol, les diacrylates et diméthacrylates de di-, tri- ou tétra-éthylèneglycol ou de dipropylèneglycol. Mais on peut encore utiliser avantageusement des polyesters acryliques qui résultent de la condensation d'un mono(méth)acrylate sur des diols aliphatiques, (comme ceux cités ci-dessus), aromatiques (par exemple dérivant du bis-phénol A), ou encore sur des polyéther-, polyester-, ou polyuréthanepolyols ayant un poids moléculaire généralement compris entre 200 et 10000. Ces pluriacrylates ou pluriméthacrylates peuvent être obtenus soit directement par estérification entre le polyol considéré et l'acide acrylique ou méthacrylique, soit indirectement par réaction d'un acrylate ou méthacrylate d'hydroxyalcoyle sur le polyol qui aura préalablement été "coiffé" de fonctions isocyanates par réaction avec un excès d'un diisocyanate. Ces divers polyacrylates-esters sont bien connus de l'homme de l'art versé dans la technologie des colles anaérobies.

Les compositions selon l'invention peuvent contenir en outre des acrylates et méthacrylates monofonctionnels, comportant dans la partie non acrylique de leur molécule des fonctions chimiques capables de leur conférer des propriétés particulières, par exemple amélioration de l'adhésion sur le substrat, diminution du retrait lors de la polymérisation, ou encore amélioration de la compatibilité et de la solubilité entre eux des divers composants de la composition anaérobie. A titre d'exemple et de manière non exhaustive, on peut citer les acrylates et méthacrylates de méthyle, d'éthyle, de butyle, d'éthylhexyle, de lauryle, d'hydroxy-2-éthyle, d'hydroxy-2-propyle, de tétrahydrofurfuryle, de dicyclopentadiényle, de dicyclopentadiényl-oxyéthyle, de phényle, de cyclohexyle, de phénoxy-2-éthyle, qui font partie de la panoplie des monomères couramment utilisés par l'homme de l'art.

Les peroxydes et hydroperoxydes organiques utilisés dans l'invention, sont des composés solubles dans les esters polyacryliques décrits ci-dessus ; il fonctionnent comme générateurs de radicaux libres, mais leur action est inhibée par la présence d'oxygène. On utilise couramment les peroxydes de dialcoyle, par exemple peroxyde de dicumyle, de ditertiobutyle, de dilauroyle, ou encore les hydroperoxydes de cumyle de tertiobutyle, d'isopropyle, de cyclohexyle, de méthyléthylcétone. Ces composés sont également bien connus de l'homme de l'art.

Les accélérateurs de polymérisation, encore dénommés activateurs, sont généralement des composés azotés. On connaît depuis longtemps les accélérateurs constitués par des amines tertiaires, plus particulièrement des amines tertiaires aromatiques. On les a associés avec divers co-accélérateurs, le plus souvent des composés ayant un caractère marqué "d'accepteur" d'électrons, par exemple les sulfimides aromatiques. En particulier, l'association dans une même formulation d'un composé azoté ayant un caractère de "donneur" d'électrons, tel qu'une amine aromatique tertiaire (par exemple, les diméthylanilines ou les diméthyltoluidines) avec le sulfimide benzoïque (saccharine) a la propriété bien établie d'augmenter considérablement la réactivité de la composition anaérobie, sans pour autant nuire à sa stabilité lorsqu'elle est conservée en présence d'air.

Parmi les alkylsulfonylphénylhydrazines caractéristiques de l'invention, on préfère la 4-(méthylsulfonyl)phénylhydrazine [877-66-7]. Mais on peut en outre envisager

la 4-(butylsulfonyl)phénylhydrazine [536542-21-0],
la 4-(cétylsulfonyl)phénylhydrazine [1590-67-6],
la 4-(difluoro-méthylsulfonyl)phénylhydrazine [4837-28-9],
la 4-(trifluoro-méthylsulfonyl)phénylhydrazine [4837-29-0],
la 4-(2-propènylsulfonyl)-phénylhydrazine [62453-93-4],
la 4-(2-butènylsulfonyl)-phénylhydrazine [62453-95-6],
la 4-(phénylsulfonyl)-phénylhydrazine [707114-83-9],

ainsi que ses dérivés ortho ou para substitués :

4'-méthylphényl-4-(phénylsulfonyl)-phénylhydrazine [80912-28-3],
4'-méthoxyphényl-4-(phénylsulfonyl)-phénylhydrazine [118316-89-5],
4'-phénoxyphényl-4-(phénylsulfonyl)-phénylhydrazine [118316-91-9],
4'-chlorophényl-4-(phénylsulfonyl)-phénylhydrazine [100062-12-2],
2'-méthoxyphényl-4-(phénylsulfonyl)-phénylhydrazine [118316-88-4] ou
2',5'-diméthylphényl-4-(phénylsulfonyl)-phénylhydrazine [118316-92-0].

Sont également inclus dans les sulfonylphénylhydrazines faisant l'objet de cette invention les dérivés ortho-substitués des composés ci-dessus, et notamment

la 2-chloro-4-(méthylsulfonyl)-phénylhydrazine [85634-77-1],
la 2-chloro-4-(cétyl-sulfonyl)-phénylhydrazine [1590-66-5], ou encore
la 2-nitro-4-(phénylsulfonyl)-phénylhydrazine [85634-77-1] et
la 2,6-dichloro-4-(méthylsulfonyl)-phénylhydrazine [111245-85-3].

Sont également inclus dans cette classe les dérivés disulfonylés tels que

la 2,4-di(méthylsulfonyl)-phénylhydrazine [57396-91-5] ou encore

la 2,4-bis-(difluorométhyl)-phénylhydrazine [27696-61-3].

Ainsi qu'on le pratique dans les formulations anaérobies de l'art antérieur, on utilise dans les formulations de la présente invention des inhibiteurs d'oxydation, qui préviennent la polymérisation intempestive des monomères acryliques ou vinyliques en général. Ce sont les quinones, hydroquinones, et des dérivés phénoliques encombrés comme le ditertiobutyl-2,6-méthyl-4-phénol, etc...

On utilise également, de façon optionnelle, des complexants pour combattre l'influence néfaste des ions métalliques, impuretés qui s'introduisent dans les compositions anaérobies avec les ingrédients de formulation, mais surtout par le contact avec les parties métalliques du matériel de fabrication, de manutention et de stockage. Ce sont des chélatants, parmi lesquels on peut citer, de façon non exhaustive, les aminocarboxylates, en particulier les sels alcalins de l'acide éthylènediaminetétracétique, le salicylaldéhyde, les aminophénols, le bipyridyle et ses dérivés, l'orthophénanthroline, l'hydroxy-8-quinoléine, la N,N'-éthylène-bis(pyridine-2-carbaldimine), etc...

D'autres additifs sont également compris dans de telles formules anaérobies, agents épaississants, thixotropants, plastifiants, colorants ; tous, agents ordinaires, fort bien connus de l'homme du métier, et sur lesquels il n'y a pas lieu de s'étendre.

Parmi les avantages qui apparaîtront clairement dans l'exposé de certains exemples, on insiste sur la réactivité anaérobie des adhésifs selon l'invention vis-à-vis des aciers traités et sur la valeur élevée des couples des assemblages ainsi réalisés. Notamment, les adhésifs selon l'invention apportent une solution technique satisfaisante au blocage des systèmes vis-boulons au freinage et à la transmission correcte des couples par les assemblages par emmanchement d'axes lisses en acier ordinaire et surtout en acier traités.

Dans les exemples qui suivent, on a représenté les composants essentiels des formulations par leur représentation abrégée habituelle que l'on rappelle ci-après :

TEGDMA = diméthacrylate de tétraéthylène glycol.
HPC = hydroperoxyde de cumyle.
DMpT = diméthyl-paratoluidine
APH = acétylphénylhydrazine
NPH = 4-nitrophénylhydrazine
DNPH = 2,4-dinitrophénylhydrazine
MSPH = 4-(méthylsulfonyl)phénylhydrazine
BSI = saccharine (abréviation de benzoic sulfimide).

On détermine l'aptitude de la colle à la polymérisation anaérobie dans les filets d'un assemblage vis-boulon, selon le mode opératoire suivant. On applique quelques gouttes de l'adhésif à tester sur les filets d'une vis préalablement dégraissée, puis on visse l'écrou correspondant, sans le serrer. Après une durée déterminée, on vérifie s'il est possible de dévisser le boulon manuellement. On répète alors l'opération avec d'autres boulons de manière à obtenir par encadrements successifs à 1 minute le laps de temps au bout duquel l'adhésif a suffisamment durci pour que l'assemblage ne puisse plus être dévissé à la main. Dans la suite, cette durée est appelée "temps de fixation".

On évalue quantitativement la qualité de l'assemblage ainsi réalisé en mesurant le couple de freinage au dévissage ($C_{FD}$) de l'ensemble vis-boulon après une durée choisie de durcissement anaérobie à la température que l'on a choisie pour ce durcissement. La mesure est effectuée selon la norme NF T 76-124.

L'aptitude à la polymérisation anaérobie entre surfaces de verre est évaluée de la façon suivante. Une goutte de solution est déposée sur une lame de verre (lame pour observations au microscope optique). Une seconde lame est alors déposée sur la première de telle sorte que les deux lames se recouvrent partiellement sur une longueur d'environ deux centimètres. Après avoir attendu quelques instants que la goutte de liquide se répartisse en une couche mince et uniforme entre les deux lames de verre, on dépose sur celles-ci un poids de 50 g. On vérifie alors à intervalles réguliers si les deux lames restent libres de glisser l'une sur l'autre. On définit ainsi le "temps de prise sur verre" comme le laps de temps au bout duquel la composition anaérobie a suffisamment durci pour que, lorsque l'une des deux lames est maintenue verticalement par une extrémité, l'autre lame ne puisse plus se mouvoir sous l'action de son propre poids.

La méthode utilisée pour évaluer la stabilité des compositions anaérobies lors du stockage consiste à placer 30 g de solution dans un flacon en polyéthylène de 60 ml de contenance, de sorte que l'adhésif soit en contact avec un volume égal d'air au-dessus du liquide. Le flacon bouché est placé dans une étuve à 82°C , et l'on mesure le temps pendant lequel la composition reste liquide. Ce laps de temps, que l'on dénomme "stabilité à 82°C", est une mesure de l'aptitude de la composition à ne pas polymériser spontanément lorsqu'elle est stockée en présence d'air. Bien qu'il n'y ait pas de relation simple entre cette mesure à 82°C et la stabilité réelle de la composition adhésive lorsqu'elle est stockée à température ambiante, il est connu par expérience que les formulations douées d'une stabilité à 82°C de 30 à 60 minutes sont suffisamment stables pour un usage commercial, et seront encore utilisables après environ un an de stockage à température ambiante. Toutefois,

il est souhaitable que la stabilité à 82°C soit supérieure à quelques heures. Cela assure en particulier que la composition pourra subir sans dommage des conditions de stockage relativement défavorables.

Exemple N°1

On prépare une solution de référence contenant 100 g de diméthacrylate de triéthylèneglycol stabilisé avec approximativement 100 ppm de paraméthoxyphénol, à laquelle on ajoute 4 g d'hydroperoxyde de cumyle à 75% et 0,5 g d'une solution stabilisante constituée de 20 parties en poids d'hydroquinone et 0,2 parties de N,N'-éthylène-bis(pyridine-2-carbaldimine) dans 80 parties de méthanol. A partir de cette solution-mère divisée en quatre parts, on prépare quatre formulations anaérobies en ajoutant à chacune d'elles 0,3 % en poids de l'un des composés suivants : diméthylparatoluidine (DMpT), (4-méthylsulfonyl)phénylhydrazine (MSpH), 1-acétyl-2-phénylhydrazine (APH) et (2,4-dinitrophényl)hydrazine (DNPH), et en agitant ces solutions en présence d'air pendant environ 24 heures.

On a déterminé d'une part, le temps de fixation de ces quatre formulations anaérobies sur assemblages vis/boulons en acier brut M8x30 - classe 6.8, (Normes NF E 25-100 et 25-112), préalablement dégraissées au trichloroéthylène, et d'autre part, les couples de freinage ($C_{FD}$) sur mêmes vis/boulons après deux heures et après 24 heures de durcissement anaérobie à température ambiante. Les résultats sont consignés sur le tableau 1 ci-après.

Tableau N°1

| accélérateur | Temps de fixation (minutes) | Couple de dévissage $C_{FD}$ (N.m) après 2 h | Couple de dévissage $C_{FD}$ (N.m) Après 24 h. |
|---|---|---|---|
| DMpT | 120 min (1) | 0 | 0(2) |
| MSPH | 30 min | 6 | 9 |
| APH | 60 min | 0 | 9 |
| DNPH | >120 min (1) | 0 | 0(2) |

Notes:

(1) Le test a été interrompu après deux heures.

(2) La composition anaérobie a partiellement polymérisé, mais le couple obtenu est trop faible pour être mesurable.

Il apparaît clairement que même en absence de tout co-accélérateur, la (méthylsulfonyl)phénylhydrazine est capable d'amorcer rapidement la polymérisation anaérobie, avec une efficacité suffisante pour que la composition anaérobie exerce un couple de dévissage appréciable après seulement deux heures de durcissement.

Exemple 2

L'exemple N°1 a été répété avec les deux composés ayant donné un couple de freinage mesurable, mais cette fois-ci en ajoutant à la formule de base 1 % en poids de chaque accélérateur au lieu de 0,3 % .

En outre, pour déterminer le couple de dévissage maximum qui peut être obtenu lorsque la réticulation de la composition est complète, des mesures de couple ont été effectuées après une cuisson à 100°C.

Tableau N°2

| accélérateur | Temps de fixation | Couple de dévissage (N.m) 2 h à 23°C | 24 h. à 23°C | 1 h. à 100°C |
|---|---|---|---|---|
| MSPH | 9 min | 5 | 11 | 16 |
| APH | 60 min | 0 | 2 | 7 |

Le temps de prise est alors considérablement réduit dans le cas où la MSPH est utilisée, et le couple de dévissage obtenu est nettement plus élevé, quel que soit le cycle de durcissement anaérobie.

Exemple 3

On prépare une solution de référence identique à celle de l'exemple 1. A partir de cette solution-mère divisée en cinq parts, on prépare cinq formulations anaérobies en ajoutant à chacune 0,1 % en poids de l'un des composés suivants :

diméthylparatoluidine (DMpT)
(4-méthylsulfonyl)phénylhydrazine (MSPH)
1-acétyl-2-phénylhydrazine (APH)
4-nitrophénylhydrazine (NPH)
(2,4-dinitrophényl)hydrazine (DNPH)

Ces solutions sont agitées en présence d'air pendant environ 24 heures.

Suivant la méthode décrite plus haut, on détermine le temps de fixation de ces compositions adhésives sur des boulons M8 x 30 de classe 6.8 en acier ordinaire d'une part, et d'autre part en acier zingué bichromaté (Z5F). Les résultats figurent au tableau 3/A ci-après.

Tableau N°3/A

| accélérateur | Temps de fixation sur boulons en acier | acier bichromaté |
|---|---|---|
| DMpT | >4 heures | >24 heures |
| MSPH | 15 min | 7 heures |
| APH | >4 heures | >24 heures |
| NPH | 16 min | >24 heures |
| DNPH | >4 heures | >24 heures |

Il apparaît clairement que dans ce type de formulation qui ne contient que 0.1 % d'accélérateur, les composés traditionnellement utilisés ne permettent pas, pour la plupart d'entre eux, d'obtenir un durcissement anaérobie dans un délai raisonnable. Seules la (méthylsulfonyl)phénylhydrazine et la 4-nitrophénylhydrazine sont capables d'amorcer rapidement la polymérisation sur l'acier ordinaire. Toutefois, dans le cas où les boulons utilisés sont recouverts d'une couche passivante de bichromate de zinc, la seule parmi les cinq compositions anaérobies ci-dessus qui durcisse en moins de 24 heures à température ambiante est celle qui contient la méthylsulfonylphénylhydrazine. Ce composé permet ainsi d'obtenir des adhésifs anaérobies dont la sensibilité au substrat est réduite par rapport aux produits de l'art antérieur.

Sur d'autres séries de boulons M8x30-classe 6.8 en acier ordinaire, on détermine les couples de freinage

au dévissage des cinq formulations ci-dessus après une cuisson d'une heure à 100°C. Les résultats sont consignés sur le tableau 3/B.

Tableau N°3/B

| accélérateur | Couple de freinage au dévissage $C_{FD}$ (N.m) |
|---|---|
| DMpT | 12 N.m |
| MSPH | 19 N.m |
| APH | 11 N.m |
| NPH | 16 N.m |
| DNPH | 8 N.m |

Le couple le plus élevé est obtenu avec la formulation contenant la MSPH.

Exemple 4

On prépare une solution de référence ayant la composition suivante :

| | |
|---|---|
| diméthacrylate de triéthylène glycol | 100 g |
| paraméthoxyphénol | 0,01 g |
| hydroperoxyde de cumyle à 75% | 4 g |
| solution stabilisante (Cf. exemple 1) | 0,5 g |
| sulfimide benzoïque | 0,4 g |

Cette composition diffère de celle de l'exemple 1 en ce qu'elle contient en plus comme co-accélérateur du sulfimide benzoïque (saccharine).

A partir de cette solution-mère divisée en cinq parties, on prépare cinq formulations anaérobies en ajoutant à chacune d'elles 0,3 % en poids de l'un des composés suivants :

diméthylparatoluidine (DMpT)
(4-méthylsulfonyl)phénylhydrazine (MSPH)
1-acétyl-2-phénylhydrazine (APH)
4-nitrophénylhydrazine (NPH)
(2,4-dinitrophényl)hydrazine (DNPH)

Ces solutions sont agitées en présence d'air pendant environ 24 heures. On remarque alors que la solution contenant la nitrophénylhydrazine (NPH) s'est spontanément polymérisée malgré la présente d'air au-dessus du liquide. La reproduction de l'expérience conduit au même résultat, ce qui confirme que l'utilisation conjointe de 4-nitrophénylhydrazine et de saccharine conduit à une composition instable pour laquelle la présence d'air ne suffit pas à inhiber la polymérisation, et la composition correspondante est éliminée dans la suite de l'essai.

Selon la méthode décrite plus haut, on détermine le temps de fixation des quatre compositions restantes sur trois types de boulons M8 en acier ordinaire de classe 6.8, en acier de classe 8.8 (Normes NF E 25-100 et 25-112) et en acier zingué bichromaté Z5F (voir tableau N°4).

Tableau N°4

| Accélérateur | Temps de fixation sur Acier 6.8 | Acier 8.8 | Acier bichromaté |
|---|---|---|---|
| DMpT | 30 min | >2 h. | >2 h. |
| MSPH | 3 min | 5 min | 60 min |
| APH | 5 min | 20 min | >2 h. |
| DNPH | 10 min | 25 min | >2 h. |

Il apparaît que l'utilisation simultanée de MSPH et de saccharine comme co-accélérateurs permet d'obtenir des compositions anaérobies ayant des performances très élevées aussi bien sur des substrats ordinaires (acier 6.8 et 8.8) que sur des substrats passivés, pour lesquels un couple de dévissage appréciable n'est normalement obtenu qu'après plusieurs heures de durcissement anaérobie.

Exemple 5

L'art antérieur divulgue l'amélioration de la réactivité des compositions anaérobies par l'utilisation comme co-accélérateur d'un composé azoté ayant un caractère "donneur" d'électrons, généralement une amine aromatique tertiaire telle que la diméthylparatoluidine.

On procède ici à l'examen comparatif de l'accélérateur selon l'invention dans de tels systèmes, et pour cela on prépare une solution de référence ayant la composition suivante :

| | |
|---|---|
| diméthacrylate de triéthylène glycol | 100 g |
| paraméthoxyphénol | 0,01 g |
| hydroperoxyde de cumyle à 75% | 4 g |
| solution stabilisante (Cf. exemple 1) | 0,5 g |
| diméthylparatoluidine (DMpT) | 0,4 g |

A partir de cette solution-mère divisée en cinq parts, on prépare cinq formulations anaérobies en ajoutant à chacune d'elles 0,3 % en poids de l'un des composés suivants :

sulfimide benzoïque (ou saccharine) (BS)
(4-méthylsulfonyl)phénylhydrazine (MSPH)
1-acétyl-2-phénylhydrazine (APH)
4-nitrophénylhydrazine (NPH)
(2,4-dinitrophényl)hydrazine (DNPH)

Ces solutions sont agitées en présence d'air pendant environ 24 heures. Suivant les méthodes décrites plus haut, on détermine le temps de fixation des cinq compositions sur des boulons M8x30 en acier de classe 6.8 et de classe 8.8, ainsi que le couple de freinage au dévissage obtenu après deux heures et après 24 heures de durcissement anaérobie à température ambiante sur des boulons M8x30-classe 6.8.

Tableau N°5

| Accélérateur | Temps de fixation | | $C_{FD}$ | |
|---|---|---|---|---|
| | Acier 6.8 | Acier 8.8 | 2h à 23°C | 24h à 23°C |
| BS | 25 min | >2 h | 2 Nm | 12Nm |
| MSPH | 40 min | >2 h. | 4 Nm | 8 Nm |
| APH | 60 min | >2 h. | <1 Nm | 6 Nm |
| NPH | 15 min | 50 min | 8 Nm | 10 Nm |
| DNPH | >2 h. | >2 h. | <1 Nm | <1 Nm |

Bien que l'utilisation d'un composé azoté tel qu'une amine tertiaire comme accélérateur auxiliaire de durcissement anaérobie soit une méthode connue, et particulièrement efficace dans le cas de certaines compositions où l'accélérateur principal est la saccharine (voir par exemple US 3 218 305) ou les nitrophénylhydrazines (voir par exemple FR 2 283 191), il apparaît au travers de ces résultats qu'avec la MSPH, on peut s'épargner l'addition de ce type de co-accélérateur. On constate en effet, en comparant les résultats de cet exemple à ceux de l'exemple 1, que les temps de fixation et les couples obtenus ici sont moins bons que ceux que l'on obtient avec la MSPH dans les mêmes conditions, mais sans l'aide d'aucun accélérateur auxiliaire. Contrairement à certains accélérateurs de durcissement anaérobie déjà connus, tels que la saccharine ou les nitrophénylhydrazines, l'utilisation de (4-méthylsulfonyl)phénylhydrazine selon la présente invention permet de formuler des compositions anaérobies ayant des performances élevées sans qu'il soit nécessaire d'y ajouter des accélérateurs auxiliaires tels que les amines aromatiques.

Exemple 6

On a ici comparé l'efficacité de trois accélérateurs basés sur l'association de la saccharine et d'un co-accélérateur aminé, dont la 4-méthylsulfonylhydrazine selon l'invention.

Pour cela, on a préparé trois lots de solution-mère de composition :

| | |
|---|---|
| diméthacrylate de triéthylène glycol | 100 g |
| solution stabilisante (Cf. exemple 1) | 0,5 g |
| hydroperoxyde de cumyle à 75% | 4 g |

à chacun desquels on ajoute les composés suivants :

saccharine 0,4 g

co-accélérateur 0,3 g

le co-accélérateur étant respectivement la diméthylparatoluidine (DMpT), la 1-acétyl-2-phénylhydrazine (APH), et la (4-méthylsulfonyl)phénylhydrazine (MSPH)

Le tableau 6 ci-après reproduit les compositions des formulations examinées et leurs caractéristiques. Le signe ∞ signifie que les temps de prise sont supérieurs à deux heures, durée au-delà de laquelle l'expérience n'a pas été poursuivie. Les couples sur boulons d'acier M6.8 ont été mesurés après deux heures de polymérisation à température ambiante.

Tableau 6

| Accélérateur | stabilité à 82°C | temps de prise sur M6.8 | Z5F | verre | couple sur M6.8 (Nm) |
|---|---|---|---|---|---|
| DMpT | 1-2 h | 25 | ∞ | ∞ | 6 |
| APH | 50-70 h | 8 | 100 | 50-70 | 17 |
| MSPH | 80-120 h | 3 | 70 | 60 | 18 |

On constatera aisément que l'accélérateur donnant à la fois les stabilités (à 82°C) et les réactivités les plus élevées est la MSPH. Les compositions qui la contiennent sont notamment les seuls systèmes qui durcissent entre lamelles de verre. La stabilité du système MSPH/saccharine est excellente (plus de 80 heures à 82°C) et les couples obtenus en deux heures à température ambiante traduisent une réactivité identique à celle de l'APH et bien supérieure à celle des systèmes à base de DMpT.

Exemple 7

La formule de base étant la même que celle de l'exemple 6, on lui ajoute 6,3 g d'un accélérateur exempt de saccharine, mais contenant de l'acide dichloracétique. La composition de ces formules est la suivante :

| | |
|---|---|
| hydroperoxyde de cumyle à 75% | 4 g |
| acide dichloracétique | 2 g |
| accélérateur | 0,3 g |

l'accélérateur étant respectivement la diméthylparatoluidine (DMpT), la 1-acétyl-2-phénylhydrazine (APH), et la (4-méthylsulfonyl)phénylhydrazine (MSPH)

Les résultats, obtenus dans les mêmes conditions que dans l'exemple 6 figurent sur le tableau 7.

TABLEAU N°7

| Accélérateur | stabilité à 82°C | temps de prise sur M6.8 | Z5F/ | verre | couple sur M6.8 |
|---|---|---|---|---|---|
| DMpT | 1-2 h | 80 | ∞ | ∞ | 0 |
| APH | 7-22 h | 5 | 30 | ∞ | 19 Nm |
| MSPH | 7-22 h | 3 | 55 | 55 | 17 Nm |

Exemple 8

On a appliqué l'essai de détermination du "temps de prise sur verre" avec les quatre formulations de l'exemple 4.

Le temps de prise obtenu avec la composition adhésive contenant la (4-méthylsulfonyl)phénylhydrazine (MSPH) comme accélérateur était de deux heures. Avec les trois autres formulations, les lames n'étaient toujours pas collées après 24 heures, et l'essai a été interrompu. On confirme ici le remarquable avantage de la MSPH dans la formulations de compositions anaérobies dont la vitesse de prise est peu influencée par la nature du substrat.

Tous les résultats présentés mettent en évidence l'avantage considérable qui résulte de l'utilisation de la 4-(méthylsulfonylphényl)hydrazine comme accélérateur de compositions anaérobies, ou comme co-accélérateur de la saccharine, tant en ce qui concerne la stabilité de la formulation au stockage prolongé que la vitesse de prise sur divers matériaux métalliques, voire même des matériaux non métalliques (verre).

## Revendications

1. Compositions adhésives anaérobies comportant un ester et/ou un mélange d'esters pluriacryliques susceptibles de polymérisation radicalaire à température ambiante, associés à des substances aptes à démarrer la polymérisation radicalaire desdits esters pluriacryliques par génération de radicaux libres dès que le mélange est soustrait à l'action de l'oxygène, et à entretenir ou accélérer cette polymérisation, caractérisées en ce qu'elles contiennent des alkylsulfonylphénylhydrazines.

2. Compositions selon la revendication 1, caractérisées en ce que la proportion d'alkylsulfonylphénylhydrazine par rapport à l'ensemble de la composition est comprise entre 0,1 et 3 % en poids.

3. Compositions selon les revendications 1 et 2, caractérisées en ce que l'alkylsulfonylphénylhydrazine est la 4-(méthylsulfonyl)phénylhydrazine.

4. Compositions selon les revendications 1 à 3, caractérisées en ce qu'elles contiennent une proportion comprise entre 0.1 et 5 % en poids d'un hydroperoxyde organique.

5. Compositions selon les revendications 1 à 4, caractérisées en ce qu'elles contiennent en outre comme co-accélérateur une proportion comprise entre 0.05 et 3 % en poids d'un sulfimide organique.

6. Application des compositions selon l'une quelconque des revendications 1 à 5, au freinage et à l'étanchéification des pièces filetées en acier zingué ou bichromaté.

7. Application des compositions selon l'une quelconque des revendications 1 à 5, à la fixation et à l'étanchéification des emmanchements lisses en acier zingué ou bichromaté.

Office européen des brevets

# RAPPORT DE RECHERCHE EUROPEENNE

Numero de la demande

EP 91 40 0370

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 283 190 (HENKEL) | 1-7 | C 09 J 133/00 |
| A,D | FR-A-2 283 191 (HENKEL) | 1-7 | |
| | | | **DOMAINES TECHNIQUES RECHERCHES (Int. Cl.5)** |
| | | | C 09 J |

Le présent rapport a été établi pour toutes les revendications

| Lieu de la recherche | Date d'achèvement de la recherche | Examinateur |
|---|---|---|
| LA HAYE | 10-04-1991 | GLIKMAN J-F.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)